(19) Europäisches Patentamt
European Patent Office
Office européen des brevets

(11) **EP 2 784 732 A1**

(12) **EUROPEAN PATENT APPLICATION**

(43) Date of publication:
**01.10.2014 Bulletin 2014/40**

(51) Int Cl.:
***G06Q 10/06*** *(2012.01)*

(21) Application number: **14155543.3**

(22) Date of filing: **18.02.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.03.2013 JP 2013068967**

(71) Applicant: **FUJITSU LIMITED**
**Kawasaki-shi,**
**Kanagawa 211-8588 (JP)**

(72) Inventors:
- **Osoekawa, Takeshi**
  **Kanagawa, 211-8588 (JP)**
- **Ando, Takahisa**
  **Kanagawa, 211-8588 (JP)**
- **Okamoto, Seishi**
  **Kanagawa, 211-8588 (JP)**

(74) Representative: **HOFFMANN EITLE**
**Patent- und Rechtsanwälte**
**Arabellastrasse 4**
**81925 München (DE)**

# (54) Information processing technique for graph including nodes

(57) A disclosed method includes: obtaining, for each node of plural nodes in a graph, which are associated each other, a display position at which the node is displayed; calculating, for each node, a movement vector according to a total sum of forces in conformity with a mechanics model in which an inertial force does not work, wherein the total sum of the forces is obtained by adding, with respect to all of nodes other than the node, a force that works in association with a distance concerning the display position with another node; moving, for each node, the display position by the calculated movement vector; and while repeating or before the obtaining, the calculating and the moving, accepting an instruction corresponding to a user's operation for causing a display position of a certain node to be changed, and changing the display position of the certain node according to the instruction.

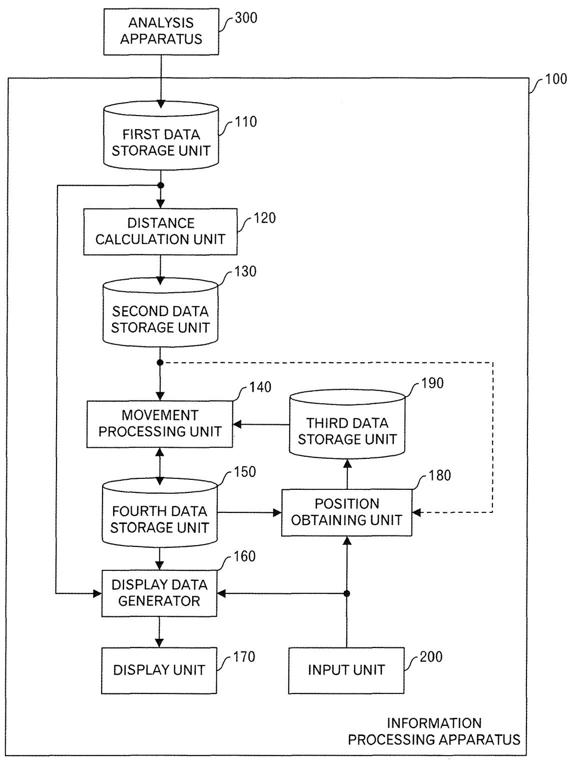


FIG.1

EP 2 784 732 A1

## Description

This invention relates to a technique for generating a graph that connects plural nodes with links.

There are a lot of techniques in which a position of each node is calculated by an algorithm that conforms with a mechanics model such as a spring model, when a graph that connects plural nodes with links is displayed.

In such a technique, when the number of nodes increases, some nodes are not typically connected with links due to problems such as a calculation amount and display space. When there is no link between nodes, there is few relation between those nodes in almost all cases. However, when the link is not actually provided, information representing that there is few relation between those nodes is not reflected to the position calculation. In other words, the position calculation of the nodes is performed in a form that the relation between those nodes is indifferent, instead of "few". Therefore, because of other constraint conditions, a case occurs in which nodes that have few relations are disposed in the neighborhood.

Recently, attention is paid to a data mining that is a technique for extracting knowledge from a large volume of data. In the data mining, analysis for deriving the relation of each element included in the large volume of data is often performed. For example, when it is assumed that the transmission source and destination of e-mail have a relation, data representing that the relation among users is extracted by analyzing e-mail that is transmitted and received among certain users. Typically, because e-mail is frequently exchanged between certain users, however, there are users that do not exchange e-mail at all, there are various relations among users.

When such data representing that the relation among users is expressed by a two-dimensional graph, the relation may be represented by the thickness of the link, or the positions of nodes representing users may be optimized by using the mechanics model such as the spring model as described above, and the relation among the users may be expressed by the final positional relation of the nodes.

In case where the latter expression method is employed, the relation between nodes may be misconceived when employing the aforementioned typical conventional method. In other words, regardless of nodes being disposed in the vicinity, those nodes may have less relation. Especially, when the relation is expressed by the two-dimensional graph, nodes and/or links are overlapped due to the problem of the space, and accordingly, it is not possible to identify nodes that are disposed in the vicinity regardless of less relation.

There are a lot of cases where such a graph is handled as being static, however, there is a case where the position of the node can be changed according to the user's instruction. However, the meaning that the position of the node is changed according to the user's instruction is not clear.

Non-Patent Document 1: Fruchterman T. M. J. and Reingold E. M., "Graph drawing by force-directed placement", Software-Practice and Experience, Vol. 21, Issue 11, pp.1129-1164, 1991

Non-Patent Document 2: Force-based graph drawing in AS3, [retrieved on March 22,2013] Retrieved from the Internet:

Non-Patent Document 3: Force-Directed graph drawing, [retrieved on March 22,2013] Retrieved from the Internet:

As one aspect, an object of this invention is to provide a technique for enabling the relation between nodes to be confirmed when the relation between nodes is expressed by a two-dimensional graph that connects plural nodes with links.

According to one aspect of embodiments, an information processing method includes: (A) obtaining, for each node of plural nodes in a graph, which are associated each other, a display position at which the node is displayed on a display device; (B) calculating, for each node of the plural nodes, a movement vector according to a total sum of forces in conformity with a mechanics model in which an inertial force does not work, wherein the total sum of the forces is obtained by adding, with respect to all of nodes other than the node, a force that works in association with a distance concerning the display position with another node; (C) moving, for each node of the plural nodes, the display position by the calculated movement vector; and (D) while repeating the obtaining, the calculating and the moving or before performing the obtaining, the calculating and the moving, accepting an instruction corresponding to a user's operation for causing a display position of a certain node among the plural nodes to be changed, and changing the display position of the certain node on the display device according to the instruction.

Reference will now be made, by way of example, to the accompanying Drawings, in which:

FIG. 1 is a functional block diagram of an information processing apparatus relating to this embodiment;
FIG. 2 is a diagram to explain the balance of forces;
FIG. 3 is a diagram depicting a processing flow of a processing relating to this embodiment;
FIG. 4 is a diagram depicting an example of data concerning degrees of association;
FIG. 5 is a diagram depicting an example of data stored in a fourth data storage unit;
FIG. 6 is a diagram depicting an example of a displayed graph;

FIG. 7 is a diagram depicting an example of data stored in a third data storage unit;
FIG. 8 is a diagram depicting a display example;
FIG. 9 is a diagram depicting a display example;
FIG. 10 is a diagram depicting a display example;
FIG. 11 is a diagram depicting a display example;
FIG. 12 is a diagram depicting a display example;
FIG. 13 is a diagram depicting a display example;
FIG. 14 is a diagram depicting a display example;
FIG. 15 is a diagram depicting a display example;
FIG. 16 is a diagram depicting a display example; and
FIG. 17 is a diagram depicting a functional block of a computer.

FIG. 1 illustrates a functional block diagram of an information processing apparatus 100 and the like, which relate to this embodiment of this invention. The information processing apparatus 100 includes a first data storage unit 110, a distance calculation unit 120, a second data storage unit 130, a movement processing unit 140, a fourth data storage unit 150, a display data generator 160, a display unit 170, a third data storage unit 190, a position obtaining unit 180 and an input unit 200.

The first data storage unit 110 stores data concerning degrees of association $a_{ij}$ between elements i and j, which is obtained from an analysis apparatus 300 that performs a processing relating to the data mining, for example, to calculate data concerning degrees of association between elements. For example, the degree of association $a_{ij}$ is expressed by a value from 0.0 to 1.0. In this embodiment, the degrees of association $a_{ij}$ for all combinations of elements are set, and reference distances described later are also set.

The distance calculation unit 120 calculates a reference distance $d_{ij}$ between a node i corresponding to an element i and a node j corresponding to an element j from the data concerning the degrees of association, which is stored in the first data storage unit 110, and stores the calculated reference distances into the second data storage unit 130. As described above, the reference distance $d_{ij}$ is calculated for all combinations of nodes. The third data storage unit 190 stores data concerning a present display position $v_i$ (= (x, y). coordinate values in a two-dimensional space) of the node i.

The movement processing unit 140 calculates, for each node, data concerning a display position $v_i$ of a movement destination by using data stored in the second data storage unit 130 and data stored in the third data storage unit 190, and stores the calculated data into the fourth data storage unit 150. In this embodiment, the spring model is employed as one example of the mechanics model for calculation of the movement destination. However, as described later, the inertial force does NOT work on nodes.

The position obtaining unit 180 obtains data of the present display position from the fourth data storage unit 150 and the input unit 200, and stores the obtained data into the third data storage unit 190.

The display data generator 160 generates display data of a graph by using data of the display positions of nodes, which is stored in the fourth data storage unit 150, and data concerning the degrees of associations $a_{ij}$ between nodes, which is stored in the first data storage unit 110, and outputs the generated display data to the display unit 170. When the user inputs an instruction to move the position of a certain node by operating the input device such as a mouse through the input unit 200, the display data generator 160 performs a processing to move the certain node in response to the instruction. Moreover, the instruction to move the position of the certain node is also outputted from the input unit 200 to the position obtaining unit 180, and the position obtaining unit 180 modifies the display position of the certain node, which is stored in the fourth data storage unit 150, and also stores the modified display position and the display positions of other nodes into the third data storage unit 190.

In principle, by disposing nodes that have strong relation in the neighborhood and by disposing nodes that have few relation far away, this embodiment enables the user who watches the graph to intuitively understand the relations among elements corresponding to nodes. For this purpose, a disposition processing of nodes is performed based on the spring model while assuming that there are links for all combinations of nodes. This is because it is a problem that the node disposition is obtained in which the fact there is few relation is not taken into consideration, when the positions of the nodes are determined while assuming that there is no link because there is few relation. In other words, this is because it is a problem that a processing is performed similarly to a case where the relation is indifferent, and nodes that have few relation are often disposed in vicinity. More specifically, no repulsion between nodes that have few relation works on those nodes.

However, when the number of nodes becomes huge, it becomes difficult to view nodes because the nodes are overlapped in the two-dimensional graph. However, in order tomaintain the aforementioned intuition, a method for resolving the overlap of the nodes by other rules is not employed.

Moreover, as schematically illustrated in FIG. 2, even when the node disposition is calculated while assuming that there are links for all combinations of nodes, there is a case where the strong attractive force that work on nodes

A and B, which have the strong relation, is balanced with the weak repulsion forces caused by a lot of other nodes, and the nodes, which have the strong relation, are not always disposed adjacently.

In this embodiment, in order to solve the difficulty in viewing the graph due to the overlap of the nodes, and to verify whether the balance of the forces such as the local optimization occurs as a temporary measure or the nodes that have strong relation are originally disposed adjacently, it is possible for the user who refers to the graph to move the node position interactively. In case where the springmodel is employed, an intuitive and easily-understandable phenomena can be confirmed in which, when a certain node among nodes that have a strong relation is separated, the certain node immediately returns to the other nodes that have the strong relation with the certain node, in other words, the original position. On the other hand, when a node is moved that is disposed at that position because the balance of the forces occurs as a temporary measure and that have a weak relation with surrounding nodes, another phenomena is confirmed that such a node moves to another position and becomes stable. Thus, by moving the node, it is possible to confirm the strength of the relation with the surrounding nodes, accordingly the importance of the node.

In the following, processing contents of the information processing apparatus 100 will be explained by using FIGs. 3 to 7.

Firstly, the distance calculation unit 120 calculates a reference distance $d_{ij}$ between nodes based on the degree of association $a_{ij}$ between elements, which is stored in the first data storage unit 110, and stores the calculated reference distances into the second data storage unit 130 (FIG. 3: step S1).

For example, data concerning the degrees of association, as illustrated in FIG. 4, is stored in the first data storage unit 110, and the reference distance $d_{ij}$ is calculated, for example, by a following expression: $d_{ij} = c(1.0-a_{ij})^2$ "c" is a coefficient. However, this expression is an example, and other expressions may be employed. However, it is preferable that the distance can be calculated even in case of the degree of association = "0".

The reference distance $d_{ij}$ is expressed by a following matrix D.

$$D = \begin{pmatrix} d_{11} & \cdots & d_{1n} \\ \vdots & \ddots & \vdots \\ d_{n1} & \cdots & d_{nn} \end{pmatrix}, d_{ii} = 0, d_{ij} = d_{ji}, d_{ij} \geq 0 \left(1 \leq i, j \leq n\right)$$

Here, it is assumed that there are "n" nodes.

Moreover, the position obtaining unit 180 sets an initial display position $v_i$ for each node i ($1 \leq i \leq n$), and stores the initial display positions into the third data storage unit 190 (step S3). For example, the initial display position is set randomly.

After that, the movement processing unit 140 calculates a movement vector $f_i$ according to a total sum of relative vectors ($v_j$-$v_i$) each of which is weighted according to a difference between a distance $d(v_i, v_j)$ with another nodej for the display position $v_j$ and the reference distance $d_{ij}$ (more specifically, a difference normalized by the distance $d(v_i, v_j)$), and stores data of the calculated movement vector $f_i$ into the fourth data storage unit 150 (step S5).

More specifically, the movement vector $f_i$ is calculated by the following expression.

$$f_i \leftarrow \delta \sum_{j=1}^{n} \left( d\left(v_i, v_j\right) - d_{ij} \right) \frac{\left(v_j - v_i\right)}{d\left(v_i, v_j\right)}$$

$\delta$ is a sufficiently lesser value. In other words, while repeating the loop, the node is slightlymoved. $d(v_i, v_j)$ represents a function for calculating a distance between a display position $v_i$ and a display position $v_j$ (e.g. Euclid distance). As described above, this expression represents that forces from all other nodes j works on one node i according to the difference with the reference distances $d_{ij}$. However, this expression is an example, and other expressions may be employed. For example, in this expression, the spring constant is "1", however, other values may be employed for the spring constant.

However, in this embodiment, the friction is infinite, and the inertial force does not work. When taking into account the inertial force in this spring model, it takes a long time up to the convergence of the node disposition. As described above, there is a case where the strength of the relation is confirmed by manually changing the node position,

however, because it takes a long time up to the beginning of the confirmation in case where it takes a long time up to the convergence, the interactivity is lowered. Moreover, because the node is moved by the user, the kinetic energy increases, however, in case where the inertial force works, the system becomes unstable, and the node disposition may not be settled. Therefore, the spring model without the inertial force is employed in this embodiment. When there is no inertial force, the calculation of the speed and the like become unnecessary to reduce a computation amount. In addition, the interactivity increases.

Furthermore, as for the weight of the node, a sufficiently large weight is employed so that the node does not move even by the spring.

This calculation is executed in a problem in which the node position $v_i$ is calculated to minimize an evaluation value of the following evaluation expression.

$$\sum_{i=1}^{n}\left|\sum_{j=1}^{n}\left(d\left(v_i,v_j\right)-d_{ij}\right)\frac{\left(v_j-v_i\right)}{d\left(v_i,v_j\right)}\right|$$

In this embodiment, instead of the scalar values such as energy that was conventionally used, a point that a direction of the force worked on each node (i.e. relative vector) is considered is different from a typical conventional art.

Then, the movement processing unit 140 moves each node i by the movement vector $f_i$ to calculate the display position of the movement destination by (the movement vector $f_i$ + present display position $v_i$), and stores the calculated display positions into the fourth data storage unit 150 (step S7).

For example, data as illustrated in FIG. 5 is stored in the fourth data storage unit 150. In an example of FIG. 5, for each identification number of the node, two-dimensional coordinate values are stored as a display position.

Then, the display data generator 160 disposes a node at the display position $v_i$ of each node i, which is stored in the fourth data storage unit 150, and also generates display data of a graph in which a link is set between nodes according to the degrees of association $a_i$, which is stored in the first data storage unit 110, for example to display the display data on the display unit 170 (step S9). In other words, when the degree of association is equal to or less than a predetermined value, display of the link may be omitted, the link may be thickened when the degree of association exceeds a predetermined value, and the link having the thickness corresponding to the degree of association may be set. However, as described above, the reference distance $d_{ij}$ is calculated while assuming links exist for all combinations of nodes, and while taking into account all combinations of nodes, the movement vector $f_i$ is calculated at the step S5.

For example, display as illustrated in FIG. 6 is made. FIG. 6 illustrates a case where four nodes exist, and the degrees of association between elements corresponding to the nodes are as depicted in FIG. 4. Thus, the link between nodes 1 and 2, which have a high degree of association, is thickened, and those nodes are disposed in the vicinity. Similarly, the link between nodes 2 and 4, which have a high degree of association, is thickened, and those nodes are disposed in the vicinity. Furthermore, the link between nodes 3 and 4, which have a relatively high degree of association, is slightly thickened, and those nodes are disposed relatively in the vicinity. Other links are thin, and nodes at both ends are disposed far away.

When an instruction to end this processing here from the user or the like is received or when a condition as a preset end condition is satisfied that a total sum of the movement vectors $f_i$, which are calculated at the step S5, is less than a predetermined value (step S11: Yes route), the processing ends. On the other hand, when the processing does not end (step S11: No route), the input unit 200 determines whether or not a movement instruction of a node is inputted from the user (step S12). When the movement instruction of the node is not inputted (step S12: No route), the processing shifts to step S15.

On the other hand, when the user operates the mouse or the like, and inputs the movement instruction by changing the display position of the displayed node by drag-and-drop, for example, (step S12: Yes route), the input unit 200 accepts the movement instruction, and outputs the movement data to the display data generator 160. Then, the display data generator 160 changes the display contents according to the movement instruction, and outputs data concerning the changed display contents to the display unit 170 (step S13).

Moreover, when there is no movement instruction from the input unit 200, the position obtaining unit 180 reads out data of the display positions, which is stored in the fourth data storage unit 150 as it is, and stores the read data into the third data storage unit 190. On the other hand, when the input unit 200 accepts the movement instruction, the input unit 200 outputs the movement instruction to the position obtaining unit 180. Then, the position obtaining unit 180 changes the display position for a node relating to the movement instruction according to the movement instruction, and then reads out data of the display positions for other nodes, which is stored in the fourth data storage unit 150, and stores the changed data and read data into the third data storage unit 190 (step S15). For example, data as illustrated in FIG.

7 is stored in the third data storage unit 190. Here, it is assumed that an instruction to move the display position of node 3 by (p, q) is made. Then, the display position of the node 3 is changed to ($a_3$ + p, $b_3$ + q). Then, the processing returns to the step S5.

By repeating such a processing, display as schematically illustrated in the following is made.

For example, when it is assumed that goods ordered together from the same store in a franchise, which handles a lot of goods, have a relation, and orders made on plural days from a lot of stores are analyzed by the analysis apparatus 300, relations among a lot of goods are extracted.

For example, when the steps S3 to S15 (except step S13) are repeated until the node positions are converged, in other words, the total sum of the vectors $f_i$ calculated at the step S5 is less than the predetermined value, a graph illustrated in FIG. 8 is displayed. Here, attention is paid to a node "milk". There are node "egg", node "mayonnaise", node "noodle" and node "bread" around the node "milk". Here, as illustrated in FIG. 9, when a movement instruction from the user is made by dragging the node "milk", the node "milk" is moved, however, other nodes do not move, because the node is so heavy that the node does not move by the force caused by the spring.

When the user drops the node "milk" in the state illustrated in FIG. 9, in other words, a change instruction of the display position of the node is detected at the step S12, the node "milk" begins moving toward the original position as illustrated in FIG. 10, by going through the steps S13 and S15 and repeating the processing of the steps S5 to S15. Then, finally, as illustrated in FIG. 11, the node "milk" almost returns to the original position, in other words the position at which the node "milk" in the graph in FIG. 8 is disposed. Thus, in case of a node that surely has strong relations with surrounding nodes, such a node almost returns to the original position. Therefore, when the user selects a node on the graph and moves it to an arbitrary position, it is possible to confirm whether or not the selected node is a node that has strong relations with surrounding nodes. As for such a node that has strong relations with surrounding nodes, there is few stable position, therefore, the node is likely to return to the original position, when the node is moved.

When the degree of association is high, the movement speed is also high. Because the inertial force does not work, the movement distance obtained for each time when the processing of the steps S5 to S15 is executed is greater compared with a case where the degree of association is low, and the node position is rapidly converged. Therefore, the verification of other nodes can be performed immediately.

As illustrated in FIGs. 8 to 11, in this embodiment, the node that has strong relations with the surrounding nodes is positioned relatively at the center with the surrounding nodes, and a state is often displayed that nodes that have a relatively weak relation are disposed around those nodes. This is because there are links between nodes that have weak relations with other nodes, and a weak repulsion works on those nodes.

Next, as illustrated in FIG. 12, attention is paid to node "corn". There are node "rice", node "bean jam" and node "macaroni" around the node "corn". Then, as illustrated in FIG. 13, this node "corn" is moved by the user who drags it, and after that, the node "corn" is dropped. Then, as illustrated in FIG. 14, the node "corn" moves in direction of the original position, however as illustrated in FIG. 15, the node "corn" does not returns to the original position, and the position of the node "corn" is converged at a different position from the original position. Thus, because there are a lot of positions that are locally stable for the node that has weak relations with surrounding nodes, that node does not return to the original position. In other words, it can be understood that, as a temporary measure, the node positions are converged like the local optimization, the relation with the surrounding nodes is not strong.

As described above, by performing the processing in this embodiment, the user can confirm, in the graph in which plural nodes are disposed in the two-dimensional space, whether this node is a node that is surrounded by other nodes that have a strong relations with this node or a node that has a weak relation with surrounding nodes and is disposed at the current position accidentally.

Moreover, when it is assumed that the transmission source user and destination user have a relation, and the degrees of association are calculated by analyzing a lot of e-mail, the graph as illustrated in FIG. 16 is generated by performing the aforementioned processing. As understood also in FIGs. 16 and 8, nodes that have a strong relation are not always disposed at the center of the graph, however, they are often disposed at positions that are slightly shifted toward the surroundings. In such a case, there is a case where nodes that are relegated to the surroundings because of the weak relations with other nodes cannot be distinguished from nodes that are disposed slightly outside of nodes that have relatively strong relations with these nodes. In an example of FIG. 16, nodes surrounded by an ellipse satisfy such a condition. Therefore, as described above, when the user moves a certain node in which the user is interested in that area, it is possible to confirm whether or not the certain node has strong relations with the inside nodes.

Although the embodiment of this invention was explained, this invention is not limited that embodiment. For example, as for the processing flow, as long as the processing result does not change, the turns of steps may be exchanged, and plural steps may be executed in parallel. For example, until the node positions are converged to a certain degree, in order words, when the total sum of the vectors $f_i$ calculated at the step S5 in FIG. 3 is greater than a predetermined value, the movement instruction of the node may not be accepted, and after the node positions are converged to a certain degree, in other words, when the total sum of the vectors $f_i$ calculated at the step S5 in FIG. 3 is less than the predetermined value, the movement instruction of the node may be accepted, and after that, a situation

that the node position is converged may be displayed.

Moreover, the functional block diagram is a mere example, and does not correspond to the program module configuration and file configuration.

Moreover, an application range of this embodiment is not limited to the relation of goods or users, and the embodiment can be applied to various field.

Furthermore, the information processing apparatus 100 may be configured by plural computers instead of a single computer.

In addition, the aforementioned information processing apparatus 100 is a computer device as illustrated in FIG. 17. That is, a memory 2501 (storage device), aCPU2503 (processor), a hard disk drive (HDD) 2505, a display controller 2507 connected to a display device 2509, a drive device 2513 for a removable disk 2511, an input unit 2515, and a communication controller 2517 for connection with a network are connected through a bus 2519 as illustrated in FIG.17. An operating system (OS) and an application program for carrying out the foregoing processing in the embodiment, are stored in the HDD 2505, and when executed by the CPU 2503, they are read out from the HDD 2505 to the memory 2501. As the need arises, the CPU 2503 controls the display controller 2507, the communication controller 2517, and the drive device 2513, and causes them to perform predetermined operations. Moreover, intermediate processing data is stored in the memory 2501, and if necessary, it is stored in the HDD 2505. In this embodiment of this technique, the application program to realize the aforementioned functions is stored in the computer-readable, non-transitory removable disk 2511 and distributed, and then it is installed into the HDD 2505 from the drive device 2513. It may be installed into the HDD 2505 via the network such as the Internet and the communication controller 2517. In the computer as stated above, the hardware such as the CPU 2503 and the memory 2501, the OS and the application programs systematically cooperate with each other, so that various functions as described above in details are realized.

The aforementioned embodiments are outlined as follows:

An information processing method relating to this embodiment includes

(A) obtaining, for each node of plural nodes in a graph, which are associated each other, a display position at which the node is displayed on a display device;

(B) calculating, for each node of the plural nodes, a movement vector according to a total sum of forces in conformity with a mechanics model in which an inertial force does not work, wherein the total sum of the forces is obtained by adding, with respect to all of nodes other than the node, a force that works in association with a distance concerning the display position with another node; (C) moving, for each node of the plural nodes, the display position by the calculated movement vector; and (D) while repeating the obtaining, the calculating and the moving or before performing the obtaining, the calculating and the moving, accepting an instruction corresponding to a user's operation for causing a display position of a certain node among the plural nodes to be changed, and changing the display position of the certain node on the display device according to the instruction.

For example, when the display position of a certain node is forcibly moved after the display positions are temporarily converged, the movement vector is recalculated according to the display position after the movement. Therefore, when the certain node is a node that has strong relations with surrounding nodes, the certain node returns to almost the original position, when the certain node is not a node that has the strong relation, a phenomenon that the display position of the certain node is converged to another display position is observed. Nodes that have the strong relation are disposed originally in the vicinity, however, there is a node that is disposed in the vicinity due to the curvature caused by displaying the graph in the two-dimensional space. According to the aforementioned processing, it is possible to easily confirm whether or not the node selected by the user is such a node. Because the movement vector is calculated while assuming that there are links for all combinations of nodes, the weak repulsions work each other even when the relation between nodes is weak, and an appropriate node disposition are obtained.

The aforementioned calculating method may include calculating, for each node of the plural nodes, a movement vector according to a total sum of relative vectors, wherein the total sum of relative vectors is obtained by adding, with respect to all of nodes other than the node, a relative vector with another node, which is weighted according to a difference between a first distance concerning the display position with the another node and a second distance with the another node, which is preset according to a degree of association between the node and the another node. Because the inertial force does not work, the convergence of the node position can be stably and rapidly realized.

In addition, a link between nodes of the plural nodes may be selected as a display target according to a degree of association between the nodes. Although the links are set for all combinations of nodes, it is separately determined whether or not the link is displayed or how to display the like.

Incidentally, it is possible to create a program causing a computer to execute the aforementioned processing, and such a program is stored in a computer readable storage medium or storage device such as a flexible disk, CD-ROM, DVD-ROM, magneto-optic disk, a semiconductor memory, and hard disk. In addition, the intermediate processing

result is temporarily stored in a storage device such as a main memory or the like.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present inventions have been described in detail, it should be understood that the various changes, substitutions, and alterations could be made hereto without departing from the spirit and scope of the invention.

## Claims

**1.** An information processing method, comprising:

obtaining, for each node of a plurality of nodes in a graph, which are associated each other, a display position at which the node is displayed on a display device;
calculating, for each node of the plurality of nodes, a movement vector according to a total sum of forces in conformity with a mechanics model in which an inertial force does not work, wherein the total sum of the forces is obtained by adding, with respect to all of nodes other than the node, a force that works in association with a distance concerning the display position with another node;
moving, for each node of the plurality of nodes, the display position by the calculated movement vector; and
while repeating the obtaining, the calculating and the moving or before performing the obtaining, the calculating and the moving, accepting an instruction corresponding to a user's operation for causing a display position of a certain node among the plurality of nodes to be changed, and changing the display position of the certain node on the display device according to the instruction.

**2.** The information processing method as set forth in claim 1 or 2, wherein the calculating comprises:

calculating, for each node of the plurality of nodes, a movement vector according to a total sum of relative vectors, wherein the total sum of relative vectors is obtained by adding, with respect to all of nodes other than the node, a relative vector with another node, which is weighted according to a difference between a first distance concerning the display position with the another node and a second distance with the another node, which is preset according to a degree of association between the node and the another node.

**3.** The information processing method as set forth in claim 1 or 2, wherein a link between nodes of the plurality of nodes is selected as a display target according to a degree of association between the nodes.

**4.** A program for causing a computer to execute the method as set forth in any of claims 1 to 3.

**5.** An information processing apparatus, comprising:

a memory; and
a processor configured to use the memory and execute a process, comprising:

obtaining, for each node of a plurality of nodes in a graph, which are associated each other, a display position at which the node is displayed on a display device;
calculating, for each node of the plurality of nodes, a movement vector according to a total sum of forces in conformity with a mechanics model in which an inertial force does not work, wherein the total sum of the forces is obtained by adding, with respect to all of nodes other than the node, a force that works in association with a distance concerning the display position with another node;
moving, for each node of the plurality of nodes, the display position by the calculated movement vector; and
while repeating the obtaining, the calculating and the moving or before performing the obtaining, the calculating and the moving, accepting an instruction corresponding to a user's operation for causing a display position of a certain node among the plurality of nodes to be changed, and changing the display position of the certain node on the display device according to the instruction.

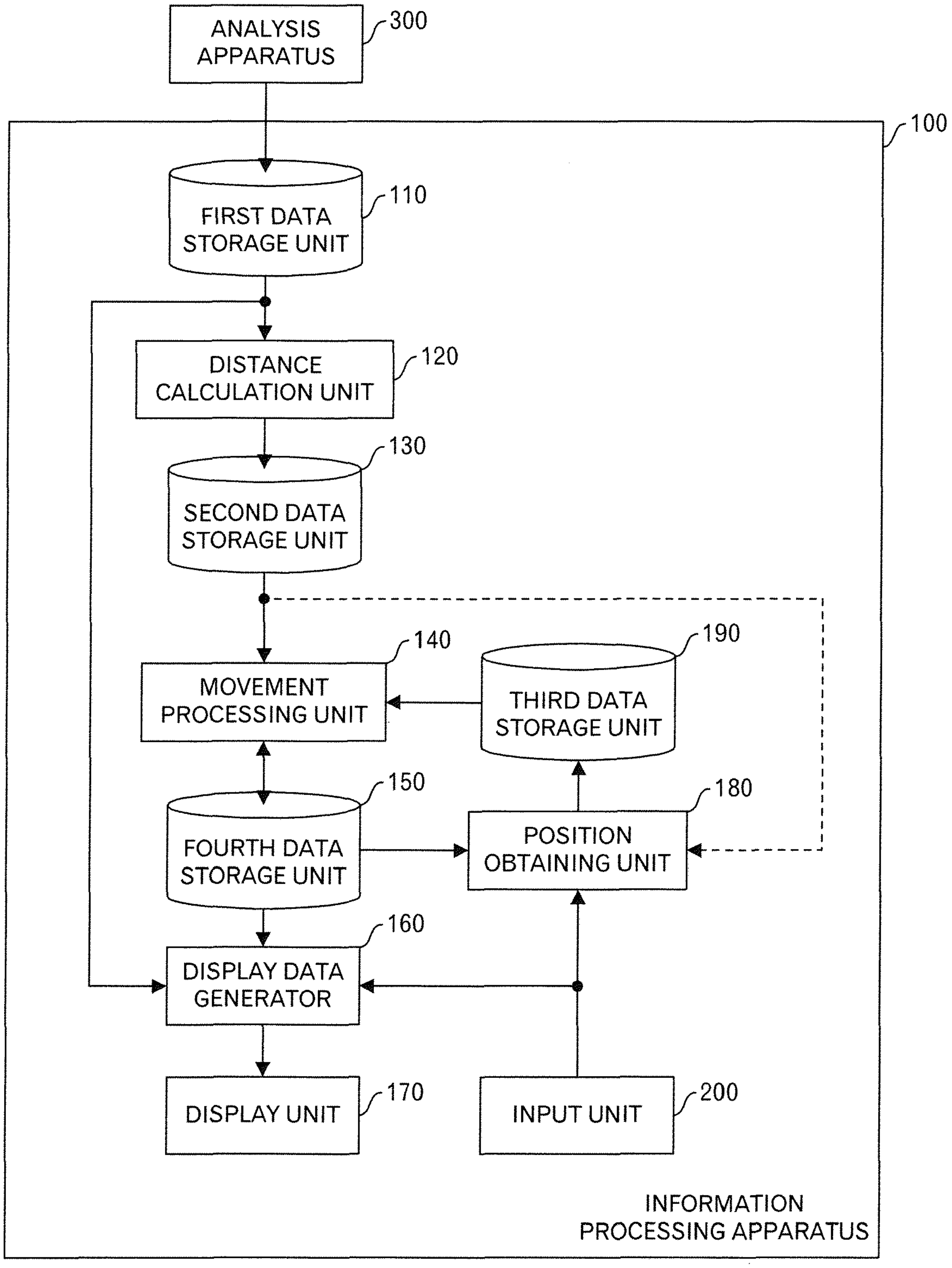
ANALYSIS APPARATUS
300
100
FIRST DATA STORAGE UNIT
110
DISTANCE CALCULATION UNIT
120
130
SECOND DATA STORAGE UNIT
140
190
MOVEMENT PROCESSING UNIT
THIRD DATA STORAGE UNIT
150
180
FOURTH DATA STORAGE UNIT
POSITION OBTAINING UNIT
160
DISPLAY DATA GENERATOR
DISPLAY UNIT
170
INPUT UNIT
200
INFORMATION PROCESSING APPARATUS

FIG.1

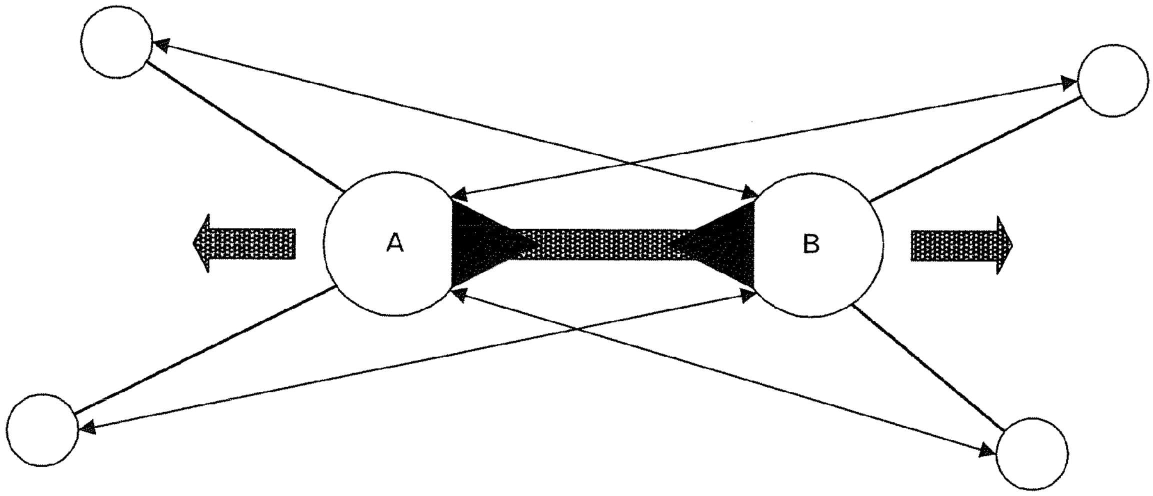


FIG.2

| PAIR OF ELEMENTS | DEGREE OF ASSOCIATION |
|---|---|
| 1−2 | 0.20 |
| 1−4 | 0.02 |
| 1−3 | 0.02 |
| 2−4 | 0.16 |
| 2−3 | 0.05 |
| 4−3 | 0.11 |

FIG.4

| NODE | DISPLAY POSITION |
|---|---|
| 1 | $(a_1,b_1)$ |
| 2 | $(a_2,b_2)$ |
| 3 | $(a_3,b_3)$ |
| 4 | $(a_4,b_4)$ |
| ⋮ | ⋮ |

FIG.5

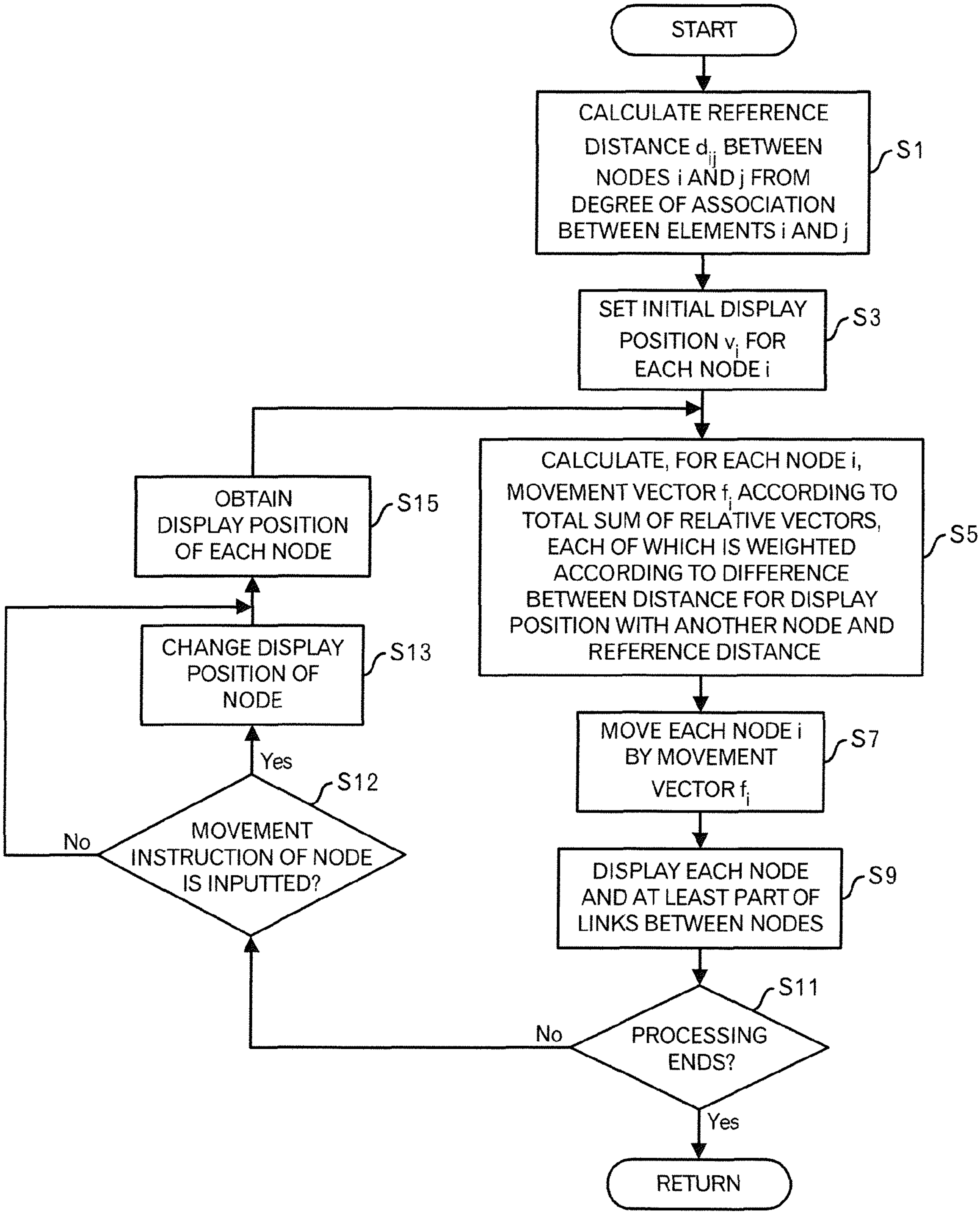
START
CALCULATE REFERENCE DISTANCE $d_{ij}$ BETWEEN NODES i AND j FROM DEGREE OF ASSOCIATION BETWEEN ELEMENTS i AND j
S1
SET INITIAL DISPLAY POSITION $v_i$ FOR EACH NODE i
S3
CALCULATE, FOR EACH NODE i, MOVEMENT VECTOR $f_i$ ACCORDING TO TOTAL SUM OF RELATIVE VECTORS, EACH OF WHICH IS WEIGHTED ACCORDING TO DIFFERENCE BETWEEN DISTANCE FOR DISPLAY POSITION WITH ANOTHER NODE AND REFERENCE DISTANCE
S5
MOVE EACH NODE i BY MOVEMENT VECTOR $f_i$
S7
DISPLAY EACH NODE AND AT LEAST PART OF LINKS BETWEEN NODES
S9
PROCESSING ENDS?
S11
Yes
No
RETURN
MOVEMENT INSTRUCTION OF NODE IS INPUTTED?
S12
Yes
No
CHANGE DISPLAY POSITION OF NODE
S13
OBTAIN DISPLAY POSITION OF EACH NODE
S15

FIG.3

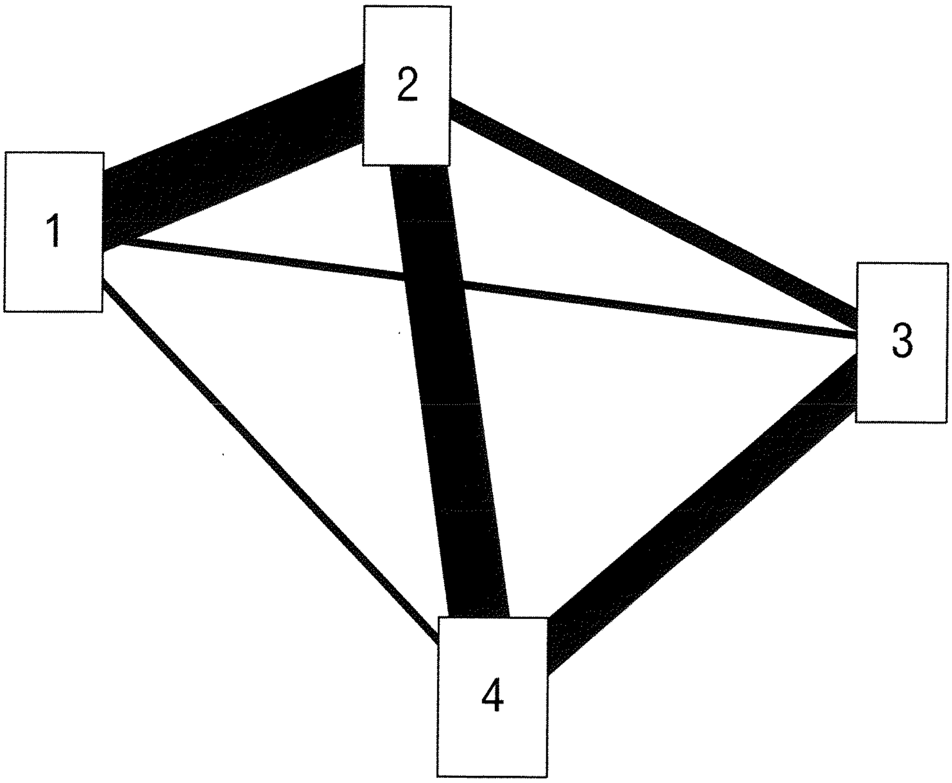


FIG.6

| NODE | DISPLAY POSITION |
|---|---|
| 1 | $(a_1,b_1)$ |
| 2 | $(a_2,b_2)$ |
| 3 | $(a_3+p,b_3+q)$ |
| 4 | $(a_4,b_4)$ |
| ⋮ | ⋮ |

FIG.7

FIG.8

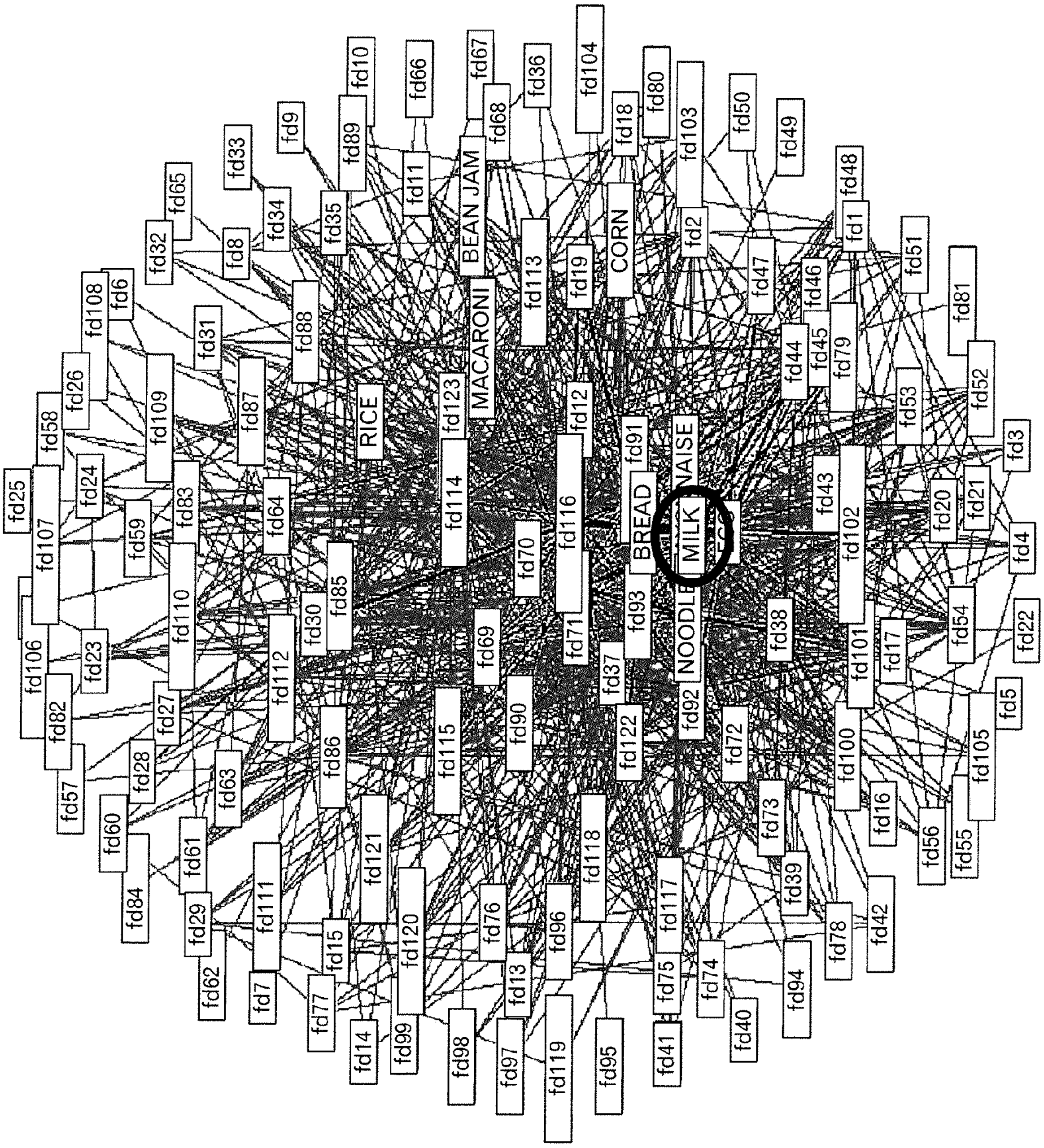

FIG.9

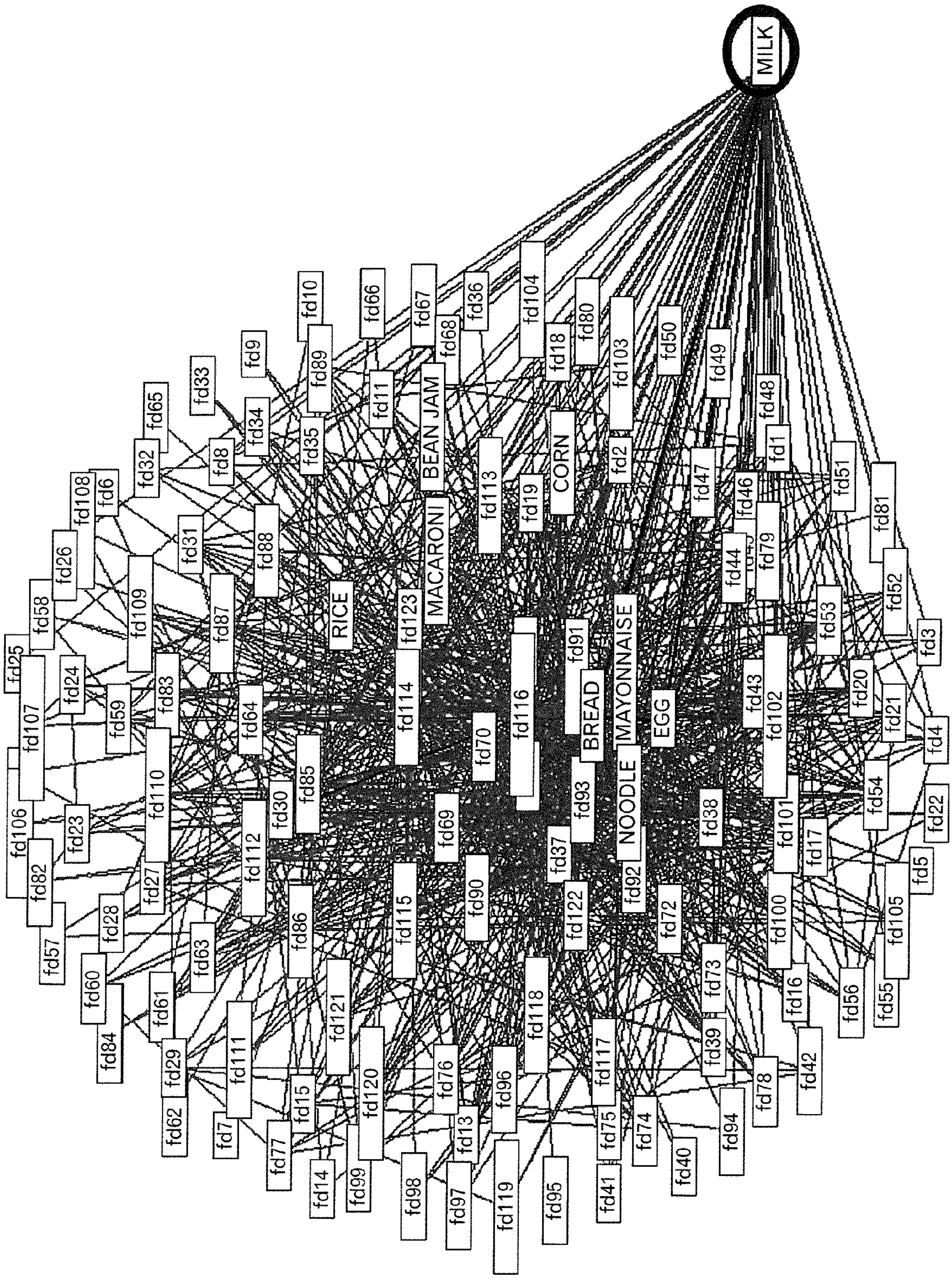
MILK
RICE
MACARONI
BEAN JAM
CORN
MAYONNAISE
EGG
BREAD
NOODLE

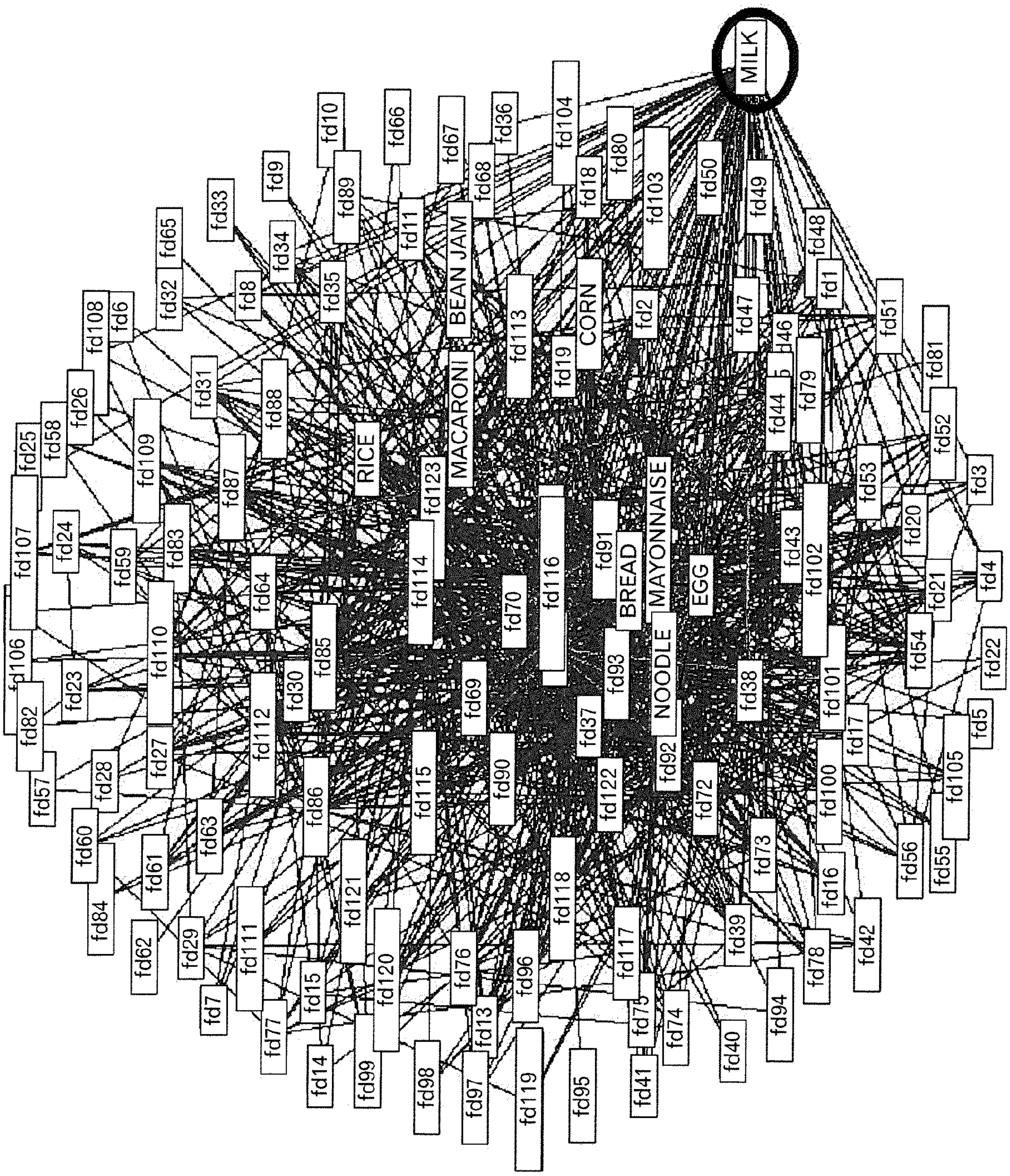
MILK
fd10
fd66
fd67
fd36
fd104
fd9
fd89
fd68
fd18
fd80
fd103
fd50
fd49
fd33
fd34
fd11
BEAN JAM
fd48
fd65
fd35
fd1
fd32
fd8
fd113
CORN
fd2
fd47
fd108
fd6
fd51
fd19
fd31
fd88
MACARONI
fd26
fd79
fd81
fd25
fd58
fd109
RICE
fd44
fd52
fd87
fd123
MAYONNAISE
fd53
fd3
fd107
fd24
fd83
fd59
fd91
fd43
fd20
fd64
fd114
fd116
BREAD
EGG
fd102
fd4
fd70
fd21
fd106
fd110
fd85
NOODLE
fd54
fd22
fd23
fd30
fd93
fd101
fd69
fd38
fd82
fd112
fd37
fd17
fd5
fd27
fd28
fd57
fd86
fd115
fd90
fd92
fd105
fd100
fd72
fd122
fd60
fd63
fd56
fd61
fd73
fd55
fd84
fd121
fd118
fd16
fd62
fd29
fd111
fd39
fd42
fd117
fd120
fd76
fd96
fd78
fd7
fd15
fd77
fd13
fd75
fd74
fd94
fd40
fd14
fd99
fd98
fd97
fd119
fd95
fd41

FIG.10

FIG.11

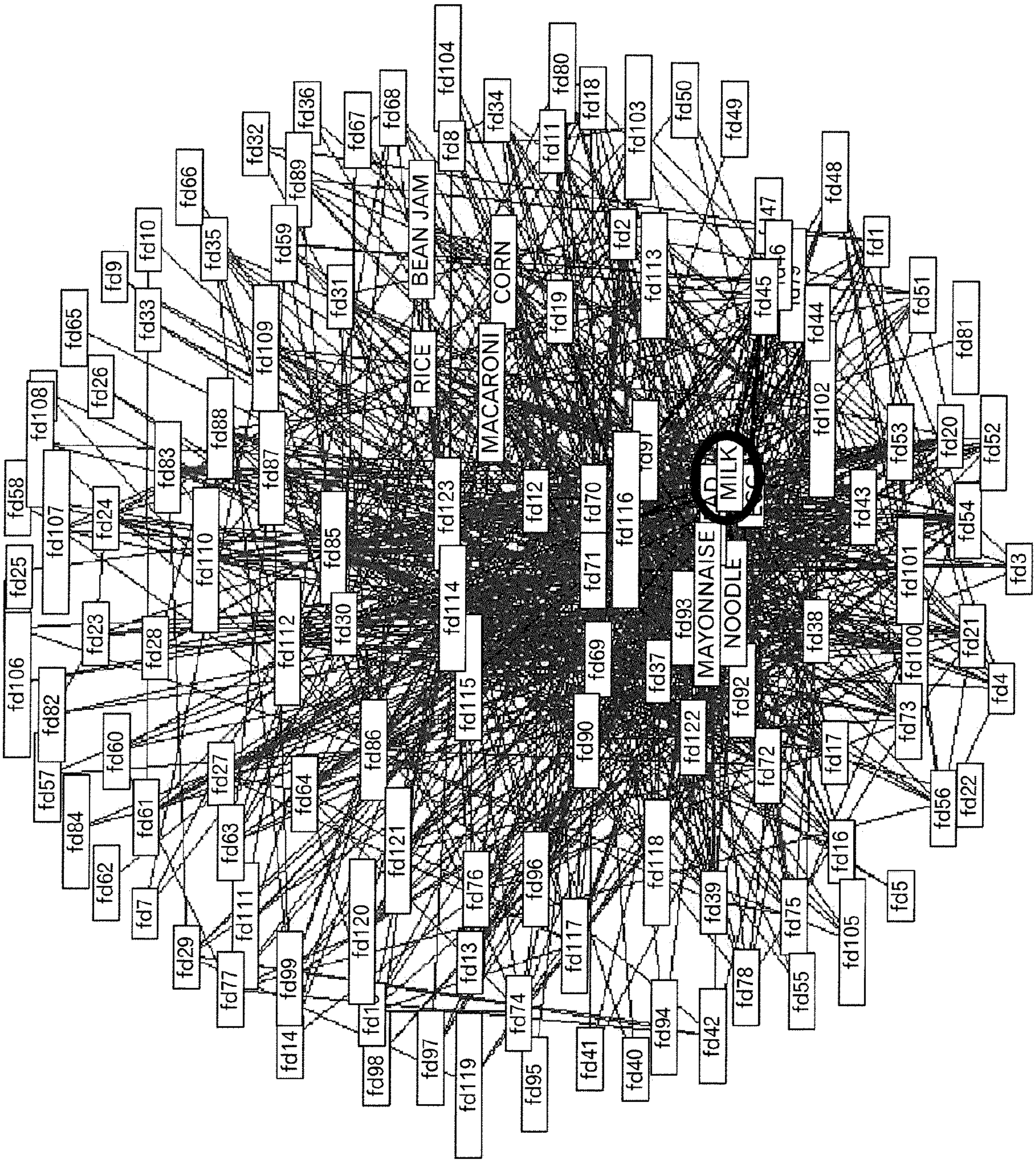

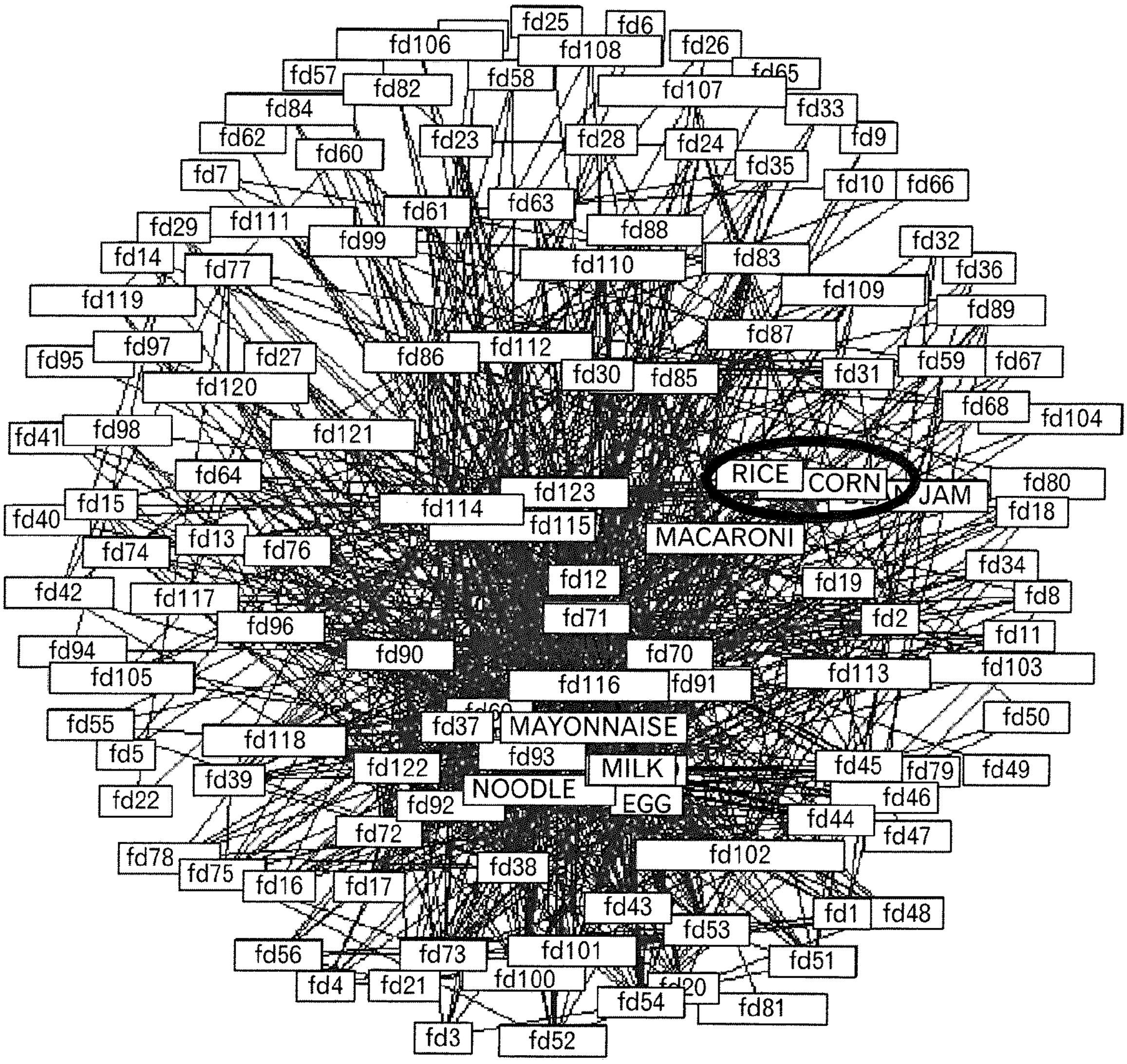
fd25
fd6
fd106
fd108
fd26
fd57
fd82
fd58
fd107
fd65
fd84
fd33
fd62
fd60
fd23
fd28
fd24
fd9
fd7
fd35
fd10
fd66
fd61
fd63
fd29
fd111
fd88
fd32
fd14
fd99
fd110
fd83
fd36
fd77
fd119
fd109
fd89
fd97
fd87
fd95
fd27
fd86
fd112
fd59
fd67
fd120
fd30
fd85
fd31
fd68
fd104
fd41
fd98
fd121
RICE
CORN
JAM
fd80
fd64
fd123
fd15
fd40
fd114
fd115
fd18
MACARONI
fd13
fd76
fd74
fd34
fd12
fd19
fd42
fd117
fd8
fd96
fd71
fd2
fd11
fd94
fd90
fd70
fd105
fd113
fd103
fd116
fd91
fd50
fd55
fd37
MAYONNAISE
fd118
fd5
fd93
fd45
fd79
fd49
fd122
MILK
fd39
NOODLE
fd46
fd22
fd92
EGG
fd44
fd72
fd47
fd102
fd78
fd75
fd38
fd16
fd17
fd43
fd1
fd48
fd53
fd56
fd73
fd101
fd51
fd100
fd4
fd21
fd54
fd81
fd3
fd52

FIG.12

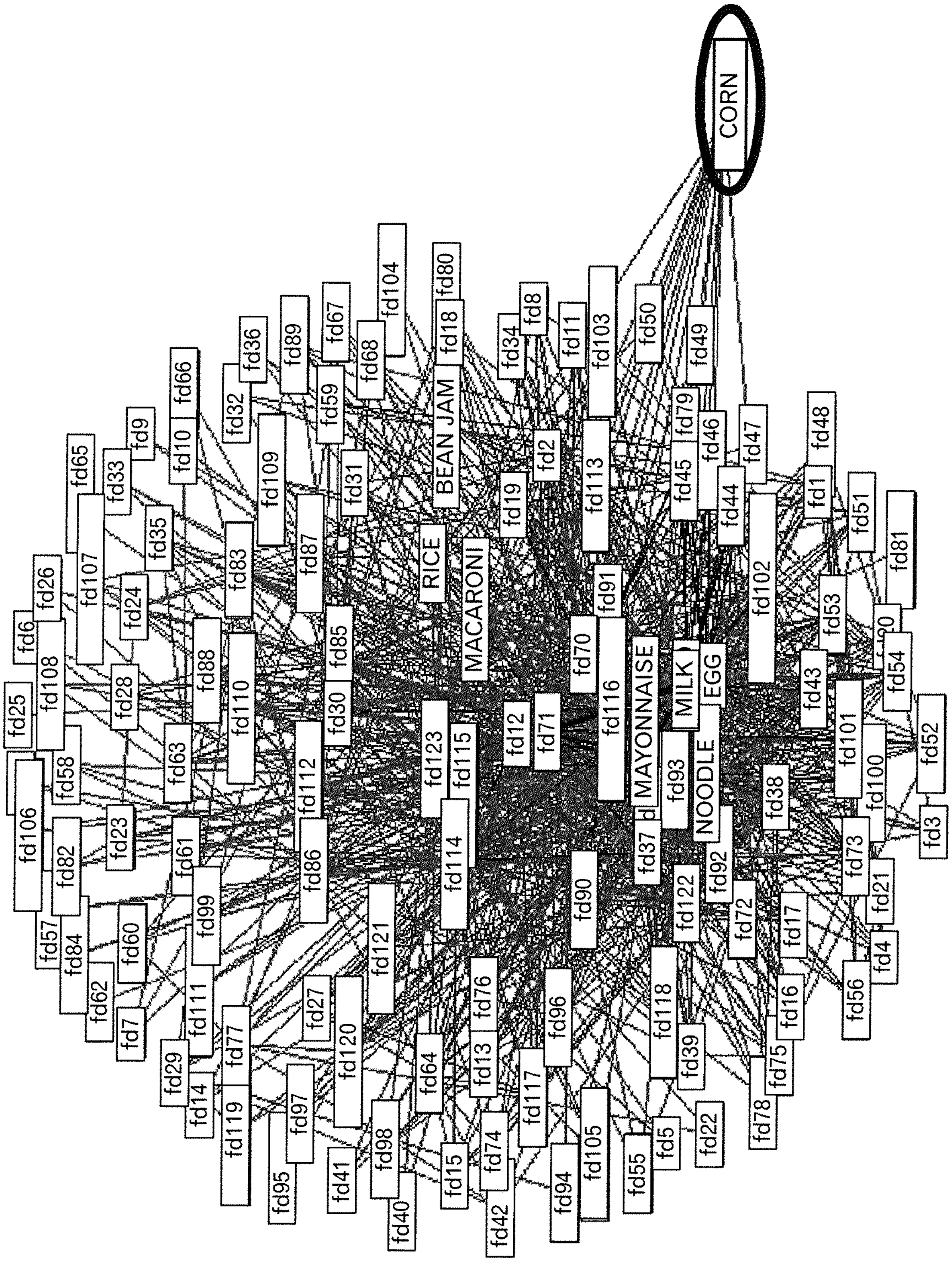
CORN
RICE
BEAN JAM
MACARONI
MAYONNAISE
MILK
EGG
NOODLE
fd1
fd2
fd3
fd4
fd5
fd6
fd7
fd8
fd9
fd10
fd11
fd12
fd13
fd14
fd15
fd16
fd17
fd18
fd19
fd21
fd22
fd23
fd24
fd25
fd26
fd27
fd28
fd29
fd30
fd31
fd32
fd33
fd34
fd35
fd36
fd37
fd38
fd39
fd40
fd41
fd42
fd43
fd44
fd45
fd46
fd47
fd48
fd49
fd50
fd51
fd52
fd53
fd54
fd55
fd56
fd57
fd58
fd59
fd60
fd61
fd62
fd63
fd64
fd65
fd66
fd67
fd68
fd70
fd71
fd72
fd73
fd74
fd75
fd76
fd77
fd78
fd79
fd80
fd81
fd82
fd83
fd84
fd85
fd86
fd87
fd88
fd89
fd90
fd91
fd92
fd93
fd94
fd95
fd96
fd97
fd98
fd99
fd100
fd101
fd102
fd103
fd104
fd105
fd106
fd107
fd108
fd109
fd110
fd111
fd112
fd113
fd114
fd115
fd116
fd117
fd118
fd119
fd120
fd121
fd122
fd123

FIG.13

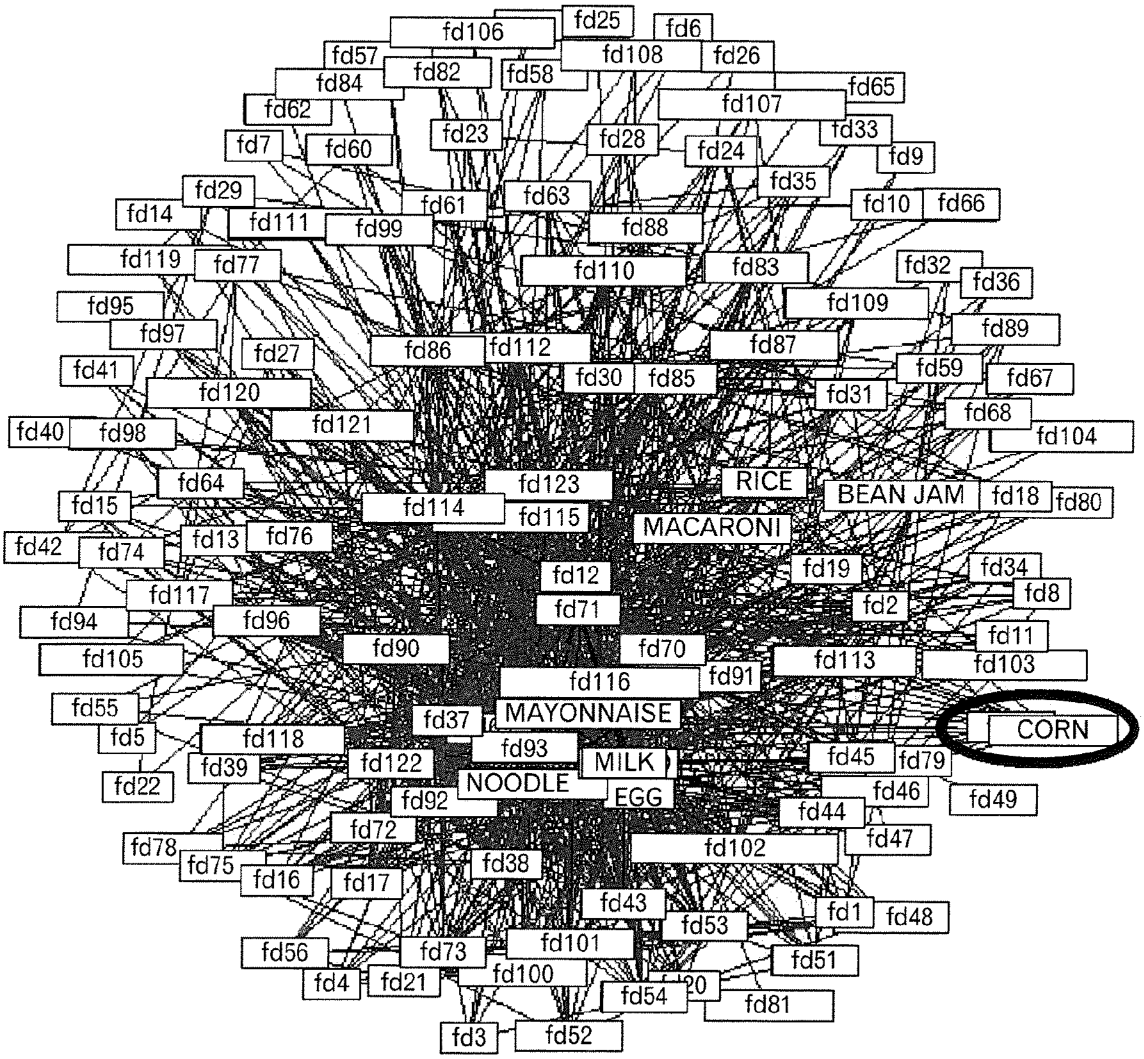
fd25
fd106
fd6
fd57
fd108
fd26
fd82
fd58
fd84
fd65
fd107
fd62
fd23
fd33
fd28
fd7
fd60
fd24
fd9
fd35
fd29
fd63
fd10
fd66
fd14
fd61
fd111
fd99
fd88
fd119
fd77
fd110
fd83
fd32
fd36
fd95
fd109
fd97
fd89
fd27
fd86
fd112
fd87
fd41
fd59
fd67
fd30
fd85
fd120
fd31
fd68
fd40
fd98
fd121
fd104
fd123
RICE
fd64
BEAN JAM
fd18
fd80
fd15
fd114
fd115
MACARONI
fd42
fd74
fd13
fd76
fd12
fd19
fd34
fd8
fd117
fd2
fd71
fd94
fd96
fd11
fd90
fd70
fd105
fd113
fd103
fd116
fd91
fd55
MAYONNAISE
CORN
fd37
fd5
fd118
fd93
fd45
fd79
fd122
MILK
fd39
NOODLE
fd46
fd22
EGG
fd49
fd92
fd44
fd72
fd47
fd78
fd102
fd75
fd38
fd16
fd17
fd43
fd1
fd48
fd53
fd101
fd56
fd73
fd51
fd100
fd4
fd21
fd54
fd81
fd3
fd52

FIG.14

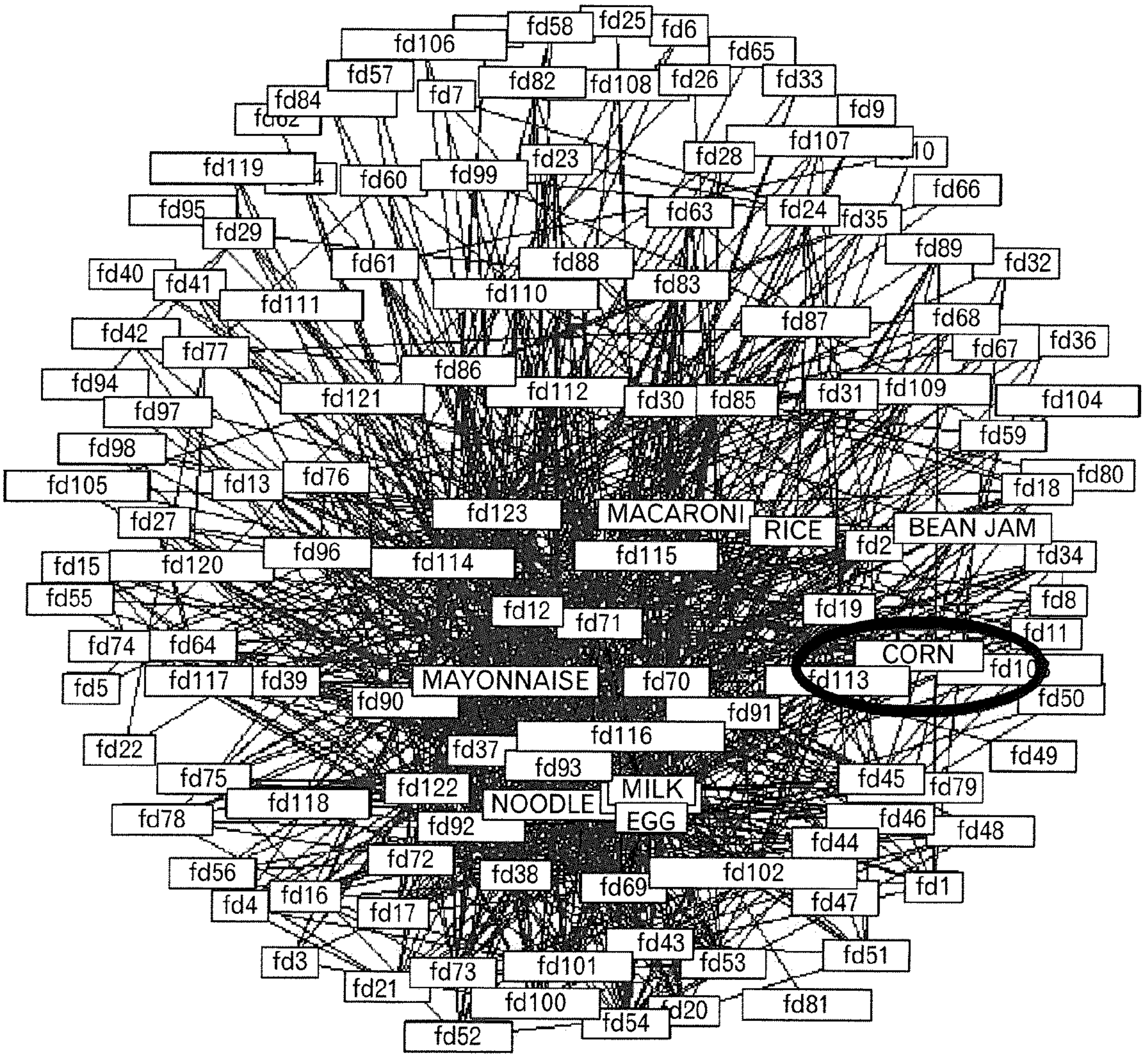
fd58
fd25
fd6
fd106
fd65
fd57
fd82
fd108
fd26
fd33
fd84
fd7
fd9
fd107
fd119
fd23
fd28
fd60
fd99
fd66
fd95
fd63
fd24
fd35
fd29
fd89
fd61
fd88
fd32
fd40
fd41
fd110
fd83
fd111
fd87
fd68
fd42
fd67
fd36
fd77
fd86
fd94
fd112
fd109
fd97
fd121
fd30
fd85
fd31
fd104
fd59
fd98
fd80
fd105
fd13
fd76
fd18
fd123
MACARONI
RICE
BEAN JAM
fd27
fd2
fd96
fd115
fd34
fd15
fd120
fd114
fd55
fd8
fd19
fd12
fd71
fd11
fd74
fd64
CORN
fd113
fd117
fd39
MAYONNAISE
fd70
fd5
fd90
fd91
fd50
fd116
fd22
fd37
fd49
fd93
fd75
fd45
fd79
fd122
MILK
fd118
NOODLE
fd46
fd78
EGG
fd48
fd92
fd44
fd72
fd56
fd38
fd102
fd1
fd16
fd69
fd47
fd4
fd17
fd43
fd51
fd3
fd101
fd53
fd21
fd73
fd100
fd81
fd54
fd52

FIG.15

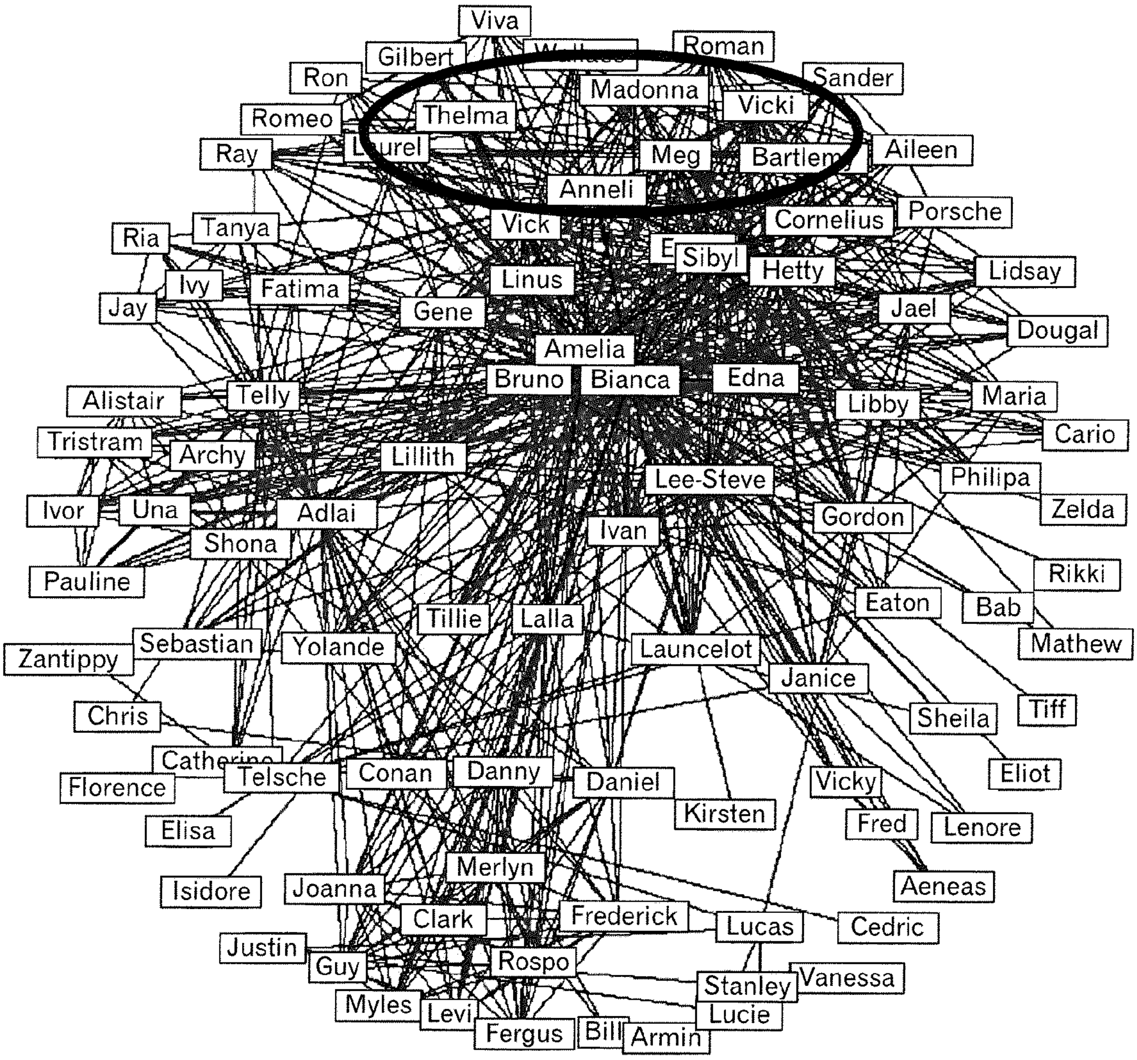
Viva
Gilbert
Roman
Ron
Madonna
Sander
Romeo
Thelma
Vicki
Ray
Meg
Aileen
Anneli
Porsche
Ria
Tanya
Vick
Cornelius
Sibyl
Hetty
Lidsay
Ivy
Fatima
Linus
Jay
Gene
Jael
Dougal
Amelia
Bruno
Bianca
Edna
Alistair
Telly
Libby
Maria
Cario
Tristram
Archy
Lillith
Philipa
Lee-Steve
Ivor
Una
Adlai
Gordon
Zelda
Shona
Ivan
Pauline
Rikki
Eaton
Bab
Tillie
Lalla
Sebastian
Yolande
Mathew
Zantippy
Launcelot
Janice
Chris
Sheila
Tiff
Telsche
Conan
Danny
Florence
Daniel
Vicky
Eliot
Elisa
Kirsten
Fred
Lenore
Merlyn
Isidore
Joanna
Aeneas
Clark
Frederick
Lucas
Cedric
Justin
Guy
Rospo
Stanley
Vanessa
Myles
Levi
Lucie
Fergus
Bill
Armin

FIG.16

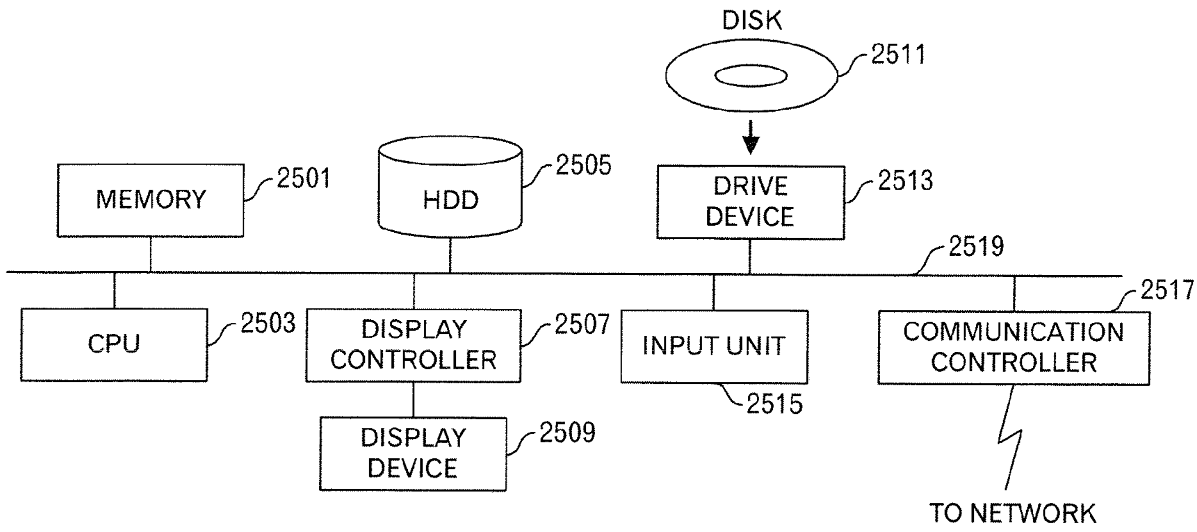
DISK
2511
MEMORY
2501
HDD
2505
DRIVE DEVICE
2513
2519
2517
CPU
2503
DISPLAY CONTROLLER
2507
INPUT UNIT
2515
COMMUNICATION CONTROLLER
DISPLAY DEVICE
2509
TO NETWORK

FIG.17

Europäisches Patentamt
European Patent Office
Office européen des brevets

# EUROPEAN SEARCH REPORT

Application Number
EP 14 15 5543

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HEER J ET AL: "Vizster: Visualizing Online Social Networks", INFORMATION VISUALIZATION, 2005. INFOVIS 2005. IEEE SYMPOSIUM ON MINNEAPOLIS, MN, USA OCT. 23-25, 2005, PISCATAWAY, NJ, USA,IEEE, PISCATAWAY, NJ, USA, 23 October 2005 (2005-10-23), pages 5-5, XP010880894, DOI: 10.1109/INFOVIS.2005.39 ISBN: 978-0-7803-9464-3 * the whole document * ----- | 1-5 | INV. G06Q10/06 |
| X | TIM DWYER: "Three dimensional UML using Force Directed Layout (Thesis)", INTERNET CITATION, 19 January 2001 (2001-01-19), XP002246202, Retrieved from the Internet: URL:http://www.cs.mu.oz.au/tr_submit/test/tr_db/mu_TR_2001_25-cp.ps.gz [retrieved on 2003-07-02] * page 13 - page 54 * ----- | 1-5 | TECHNICAL FIELDS SEARCHED (IPC) |
| X | TATEMURA J: "Visualizing document space by force-directed dynamic layout", VISUAL LANGUAGES, 1997. PROCEEDINGS. 1997 IEEE SYMPOSIUM ON ISLE OF CAPRI, ITALY 23-26 SEPT. 1997, LOS ALAMITOS, CA, USA,IEEE COMPUT. SOC, US, 23 September 1997 (1997-09-23), pages 119-120, XP010250576, DOI: 10.1109/VL.1997.626566 ISBN: 978-0-8186-8144-8 * the whole document * ----- | 1-5 | G06Q |

The present search report has been drawn up for all claims

1

| Place of search | Date of completion of the search | Examiner |
|---|---|---|
| The Hague | 2 June 2014 | Rachkov, Vassil |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **FRUCHTERMAN T. M. J. ; REINGOLD E. M.** Graph drawing by force-directed placement. *Software-Practice and Experience,* 1991, vol. 21 (11), 1129-1164
- *Force-based graph drawing in AS3,* 22 March 2013
- *Force-Directed graph drawing,* 22 March 2013